# EUROPÄISCHE PATENTANMELDUNG

(11) **EP 4 559 755 A1**
(43) Veröffentlichungstag der Anmeldung: **28.05.2025**
(21) Anmeldenummer: 24208826.8
(22) Anmeldetag: 25.10.2024
(51) Int. Cl.: B60R 3/02, B61D 23/02

(54) **FAHRZEUG MIT VERSCHWENKBAREM AUSSCHUB**

(30) Priorität: 27.11.2023 DE 202023106992 U
(71) Anmelder: Bode - Die Tür GmbH, 34123 Kassel (DE)
(72) Erfinder: Theis, Christoph, 34537 Bad Wildungen (DE); Cimmino, Marco, 37139 Adelebsen (DE); Arend, Ulrich, 34576 Dickershausen (DE); Kunzemann, Torben, 34311 Naumburg (DE)
(74) Vertreter: Patentanwälte Bauer Vorberg Kayser

(57) **Zusammenfassung**

Die vorliegende Erfindung betrifft ein Fahrzeug mit einem Fahrzeugkörper (14) und einem Schiebetritt (10) mit einem verlagerbaren Ausschub (34) und einer Trittleiste (40), wobei der Ausschub (34) eine Vorderkante (38) aufweist, wobei der Ausschub (34) gemeinsam mit der Trittleiste (40) gegenüber dem Fahrzeugkörper (14) um eine definierte Drehachse (62) verschwenkbar ist, und wobei die Trittleiste (40) und der Ausschub (34) derart gemeinsam verschwenkbar sind, dass eine vertikale Distanz (d) zwischen der Trittleiste (40) und einer Trittfläche (36) des Ausschubs (34) bei einem Verschwenken unverändert bleibt.

## Beschreibung

Die vorliegende Erfindung betrifft ein Fahrzeug mit einem Schiebetritt gemäß Patentanspruch 1. Insbesondere handelt es sich bei dem Fahrzeug um ein schienengebundenes Fahrzeug.

Unter einem "Fahrzeug" kann vorliegend insbesondere ein radgebundenes oder ein schienengebundenes Fahrzeug zu verstehen sein. Bei radgebundenen Fahrzeugen kann es sich im vorliegenden Kontext insbesondere um Transportfahrzeuge für den Personenverkehr handeln, beispielsweise um Busfahrzeuge. Bei schienengebundenen Fahrzeugen kann es sich im vorliegenden Sachzusammenhang ebenfalls um Transportfahrzeuge für den Personenverkehr handeln, beispielsweise um Straßenbahnen, S-Bahnen, Züge (Regionalzüge, Fernzüge), U-Bahnen, Trams, etc.

Schiebetritte mit einem ausfahrbaren Ausschub werden in der Regel bei Fahrzeugen jeglicher Art eingesetzt, bei welchen beim Ein- oder Ausstieg von Personen ein Höhenunterschied oder ein Spalt zwischen einem Haltesteig und einer Bodenfläche im Innenraum des Fahrzeugs überwunden werden muss. Eine solche Situation kann beispielsweise beim Halten eines Zuges im Bahnhof, aber auch beim Halten eines Flugzeugs an einem Gate bzw. Haltesteig des Gates auftreten.

Wie beschrieben, dienen Schiebetritte insbesondere dazu, einen Spalt zwischen einem Fahrzeug und einem Haltesteig durch diesen Schiebetritt zu überbrücken. Der Schiebetritt sollte im ausgefahrenen Zustand dabei möglichst bündig mit der Oberkante des Haltesteigs abschließen. Insbesondere aufgrund von Toleranzen bei der Montage des Fahrzeuges, kann es dazu kommen, dass ein ausgefahrener Schiebetritt nicht das Höhenniveau des Haltesteiges aufweist, sondern eine Höhendifferenz bzw. ein vertikaler Abstand zwischen der Vorderkante des Ausschubs und dem Haltesteig verbleibt. In der Praxis können die Toleranzen bei der Fahrzeugmontage so ausgelegt sein, dass es zu Höhendifferenzen von der Vorderkante des Schiebetritts zum Haltesteig bis zu 20 mm kommt.

Damit die Vorderkante bündig mit dem Haltesteig abschließt, muss diese in der, Höhe anpassbar sein, insbesondere muss die Vorderkante bis zu etwa 20 mm in der Höhe verstellbar sein.

Die zugrundeliegende Aufgabe der vorliegenden Erfindung ist es daher, ein Fahrzeug mit einem Schiebetritt zur Verfügung zu stellen, welches eine möglichst einfache Anpassung der vertikalen Position der Vorderkante des Ausschubs ermöglicht, um die toleranzbedingten Höhenunterschiede zwischen Fahrzeug und Haltesteig auszugleichen. Insbesondere soll dabei auch der vertikale Abstand zwischen der Oberkante einer Trittleiste und einer Trittfläche unverändert bleiben.

Die Lösung der Aufgabe erfolgt erfindungsgemäß mit den Merkmalen der unabhängigen Ansprüche. Weitere praktische Vorteile und Ausführungsformen sind in Verbindung mit den abhängigen Ansprüchen beschrieben.

Ein erfindungsgemäßes Fahrzeug umfasst einen Fahrzeugkörper. Als Fahrzeugkörper wird insbesondere ein Wagen- bzw. Fahrzeugkasten bezeichnet.

Das Fahrzeug weist einen Schiebetritt auf, wobei der Schiebetritt einen verlagerbaren Ausschub umfasst. Der Ausschub ist zwischen einer eingefahrenen und einer ausgefahrenen Stellung hin- und her bewegbar, insbesondere entlang einer sich in Fahrzeugquerrichtung erstreckenden Verschiebeachse. In der ausgefahrenen Stellung stellt der Ausschub eine Trittfläche bereit, über welche eine Person das Fahrzeug betreten oder aus diesem aussteigen kann. Um eine solche Linearverschiebung des Ausschubs zu gewährleisten, kann der Ausschub mittels einer Führung in einem Grundrahmen linearverschiebbar geführt sein. Schiebetritte erleichtern das Ein- und Aussteigen aus einem Fahrzeug, indem sie einen zwischen dem Fahrzeug und einem Haltesteig (z.B. einer Bahnsteigkante) vorliegenden Spalt überbrücken.

Der Schiebetritt weist zudem eine Trittleiste auf. Eine Trittleiste ist insbesondere eine im Winkel zur Trittfläche, schräg zum Fahrzeug verlaufende Fläche. Der Ausschub ist insbesondere in Fahrzeughochrichtung betrachtet unterhalb der Trittleiste hin- und her bewegbar.

Der Ausschub weist eine Vorderkante auf, welche zum bündigen Abschluss mit einem Haltesteig vorgesehen ist. Um den Ausschub und insbesondere die Vorderkante in der vertikalen Position relativ zum Fahrzeuggrundköper anzupassen, ist der Ausschub gemeinsam mit der Trittleiste gegenüber dem Fahrzeugkörper (dem Wagenkasten) um eine definierte Drehachse verschwenkbar. Eine definierte Drehachse heißt hier, dass der Schiebetritt um eine relativ zum Fahrzeug festgelegte Achse verschwenkbar ist. Die Trittleiste und der Ausschub sind dabei derart gemeinsam verschwenkbar, dass eine vertikale Distanz d zwischen der Trittleiste und einer Trittfläche des Ausschubs bei einem Verschwenken unverändert bleibt.

Der Schiebetritt ist mit anderen Worten mitsamt dem Ausschub und der Trittleiste gegenüber dem Grundkörper verschwenkbar. Je nach Neigung des Schiebetritts relativ zu dem Fahrzeug ändert sich die Höhenlage, bzw. vertikale Position des Ausschubs und damit der Vorderkante relativ zum Fahrzeugkörper. Durch die Rotation wird der Ausschub weiter nach oben oder weiter nach unten geneigt.

Es ist zudem durch eine feste Verbindung zwischen dem Ausschub und der Trittleiste sichergestellt, dass die Oberfläche des Ausschubs und die Oberfläche der Trittleiste nur eine festgelegte vertikale Distanz aufweisen, welche kleiner als eine vorgegebene Höhe ist, um Barrierefreiheit zu gewährleisten.

Die Verschwenkung des Schiebetritts ist, wie im Folgenden beschrieben, relativ einfach und intuitiv zu realisieren. Sie benötigt wenig Bauraum oder komplizierte mechanische Teile.

Durch die Verschwenkung bzw. Rotation des Schiebetritts mitsamt Ausschub und Trittleiste - im Gegensatz zu Lösungen, wobei nur eine Vorderkante des Ausschubs gegenüber dem restlichen Ausschub verschwenkt wird - bildet der Ausschub eine ebene Trittfläche über seine gesamte Oberfläche, unabhängig von der Neigung des Ausschubs. Dies ermöglicht eine vollflächige Aufstandserkennung durch eine Schaltmatte zur Passagiererkennung auf dem Ausschub.

Insbesondere kann der Schiebetritt um einen maximalen Verschwenkwinkel von mindestens +0,6° und bevorzugt um mindestens +1° und bevorzugt um mindestens +2° nach oben und insbesondere um mindestens -1°, weiter bevorzugt um -1,4° und besonders bevorzugt um mindestens -2° nach unten verschwenkt werden.

In einer praktischen Ausführungsform weist der Schiebtritt einen Grundrahmen auf und der Grundrahmen ist gemeinsam mit dem Ausschub und der Trittleiste um die definierte Drehachse verschwenkbar. Eine Verschwenkung mitsamt dem Rahmen ermöglicht ein einfaches Handling der Verschwenkung.

Der Schiebetritt umfasst insbesondere auch noch die Ausschubmechanik zur Linearverschiebung des Ausschubs und/oder die Ausschubelektronik.

In einer praktischen Ausführungsform ist der Schiebetritt und insbesondere der Grundrahmen an einem mit dem Fahrzeug verbundenen Seitenteil verdrehbar gelagert. Insbesondere ist beidseitig des Grundrahmens jeweils ein mit dem Fahrzeug verbundenes Seitenteil angeordnet. Bei dem Seitenteil kann es sich um einen mit dem Fahrzeugkörper fest verbundenen Träger handeln. Insbesondere sind der Grundrahmen und das jeweilige Seitenteil über einen Bolzen miteinander verbunden, um welchen der Grundrahmen gegenüber dem Seitenteil verdrehbar ist.

Um den Grundrahmen in der eingestellten Position zu fixieren, kann dieser mit dem Seitenteil verschraubt sein. Dazu weisen der Grundrahmen und das Seitenteil jeweils korrespondierende Öffnungen auf, welche von einer Schraube durchragt werden können. Das Seitenteil weist insbesondere ein oder mehrere Langlöcher auf, in welchen bei einer Verschwenkung des Grundrahmens eine Schraube geführt ist, und wobei die Schraube dann in der Endmontagelage angezogen werden kann.

Der maximale Verschwenkwinkel ist insbesondere durch einen Anschlag begrenzt. Der maximale Verschwenkwinkel, d.h. die maximale Verdrehung des Schiebetritts gegenüber dem Fahrzeug, kann insbesondere durch die Länge der Langlöcher am Seitenteil begrenzt sein. Wenn die Schraube zum Fixieren des Grundrahmens am Seitenteil gegen den oberen oder unteren Rand des korrespondierenden Langlochs anschlägt, dann ist die maximale Verdrehstellung erreicht.

Insbesondere ist die Trittleiste fest mit dem Grundrahmen verbunden. Bei Verschwenken des Grundrahmens kann dann erreicht werden, dass der Ausschub und auch die Trittleiste mitverschwenkt werden.

In einer weiteren praktischen Ausführungsform steht die Trittleiste mit einer Deckplatte bewegbar in Eingriff. Die Trittleiste weist dazu insbesondere an einer zur Fahrzeuginnenseite weisenden Stirnseite einen Vorsprung auf, welche in einer Nut in der Deckplatte aufgenommen ist. Die Nut weist insbesondere im Querschnitt betrachtet eine runde Geometrie auf und der Vorsprung ist derart dimensioniert, dass er bei Rotation der Trittleiste relativ zur Deckplatte in der Nut verfahrbar ist. Die Trittleiste und die Deckplatte sind somit zueinander beweglich und können um eine Drehachse in Fahrzeuglängsrichtung relativ zueinander verschwenkt werden. Die Deckplatte ist insbesondere derart beweglich an der Trittstufe angeordnet, dass diese beim Verschwenken des Grundrahmens ausschließlich rotatorisch ihre Neigung verändert. Das der Trittstufe gegenüberliegenden Ende der Deckplatte ist insbesondere ortsfest am Fahrzeug angeordnet. Eine translatorische Verschiebung in Fahrzeugquerrichtung oder Fahrzeughochrichtung findet durch diese ortsfeste Anordnung der Drehachse beim Verschwenken nicht statt. Durch die Vermeidung einer translatorischen Verschiebung in Fahrzeugquerrichtung und Fahrzeughochrichtung ist eine Kompensation von Maßänderungen beim Verschwenken an der Schnittstelle zur ortsfesten Anordnung am Fahrzeug nicht erforderlich.

Insbesondere ist die Deckplatte relativ zur Trittleiste derart verschwenkbar angeordnet, dass bei Verschwenken der Trittkassette um den maximalen Verschwenkwinkel, keine Verschiebung der Deckplatte erfolgt. Insbesondere sind eine erste Drehachse, um welche die Trittkassette gegenüber dem Fahrzeug verschwenkbar ist (=definierte Drehachse), und eine zweite Drehachse, um welche die Deckplatte relativ zur Trittstufe verschwenkbar ist, konzentrisch angeordnet. Die erste Drehachse und die zweite Drehachse können aber auch beabstandet zueinander angeordnet sein. Dann ist ein Stoß zwischen der Nut der Deckplatte und dem Vorsprung der Trittleiste ist so dimensioniert, bzw. es besteht ausreichend Spiel zwischen der Trittleiste und der Deckplatte, dass bei maximalem Verschwenkwinkel, die Deckplatte nicht in Fahrzeugquerrichtung bewegt wird.

Die Drehachse ist insbesondere über die Länge des Grundrahmens betrachtet außermittig angeordnet. Bei der Länge des Grundrahmens ist hier die sich in Fahrzeugquerrichtung erstreckende Länge gemeint. Insbesondere ist die Drehachse auf der von der Mitte aus betrachtet außenseitigen Hälfte des Grundrahmens angeordnet und insbesondere in dem außenliegenden 30%. Die vertikale Veränderung ist dementsprechend an den beiden gegenüberliegenden Enden des Grundrahmens unterschiedlich. So ist der Hub an der Außenseite, an welcher der Ausschub aus dem Grundrahmen in Richtung Bahnsteig ausgefahren wird, kleiner als auf der Innenseite des Fahrzeuges und kann somit feiner eingestellt werden.

Die Erfindung betrifft auch ein Verfahren zur Einstellung der vertikalen Position der Vorderkante eines Schiebetritts, wobei ein Schiebetritt in das Fahrzeug eingebaut wird und dann der Ausschub mitsamt der Trittleiste oder insbesondere der gesamte Schiebetritt mit Grundrahmen, verschwenkt wird. Durch die Verschwenkung neigt sich die Vorderkante des Schiebetritts bzw. des Ausschubs nach oben oder unten.

Die Trittleiste wird zusammen mit dem Schiebetritt verschwenkt und der vertikale Abstand zwischen der Trittoberfläche des Ausschubs und Trittleiste bleibt unabhängig von der Verschwenkung konstant.

Insbesondere steht die Trittleiste während des Verschwenkens mit einer Deckplatte in Eingrifft, wobei die Deckplatte auch bei Verschwenken der Trittleiste in ihrer Position verbleibt. Insbesondere verbleibt ein mit dem Fahrzeug verbundenes Ende Deckplatte in Position und wird nur um eine ortsfest an dem Fahrzeug angeordnete Drehachse verschwenkt. Das Ende der Deckplatte verschiebt sich nicht in Fahrzeugquerrichtung oder Fahrzeughochrichtung.

Nach Einstellung der vertikalen Position der Vorderkante des Ausschubs, wird diese Position fixiert, insbesondere indem ein Grundrahmen des Schiebetritts mit dem Fahrzeug, insbesondere einem Seitenteil, verschraubt wird.

Weitere praktische Ausführungsformen und Vorteile sind in Verbindung mit den Figuren beschrieben. Es zeigen:
- Fig. 1: einen Schiebtritt in einem Fahrzeug mit einem Seitenteil in einer geschnittenen Darstellung in einer perspektivischen Ansicht von schräg vorn,
- Fig. 2: den Schiebetritt aus Fig. 2 in einer perspektivischen Ansicht von schräg seitlich,
- Fig. 3: den Schiebtritt aus Fig. 1 und 2 isoliert von dem Fahrzeug, jedoch mit Deckplatte, in einer perspektivischen Ansicht von schräg vorne,
- Fig. 4: den Schiebetritt aus Fig. 1 bis 3 in einer geschnitten Darstellung gemäß einer in Fahrzeugquerrichtung verlaufenden Schnittlinie durch den Schiebetritt,
- Fig. 5: den Schiebetritt aus Fig. 1 und 3 in einer ersten Position im Fahrzeug in einer geschnittenen Darstellung in einer perspektivischen Ansicht von schräg vorne, und
- Fig. 6: den Schiebetritt aus Fig. 1 und 3 in einer zweiten Position im Fahrzeug in einer geschnittenen Darstellung in einer perspektivischen Ansicht von schräg vorne.

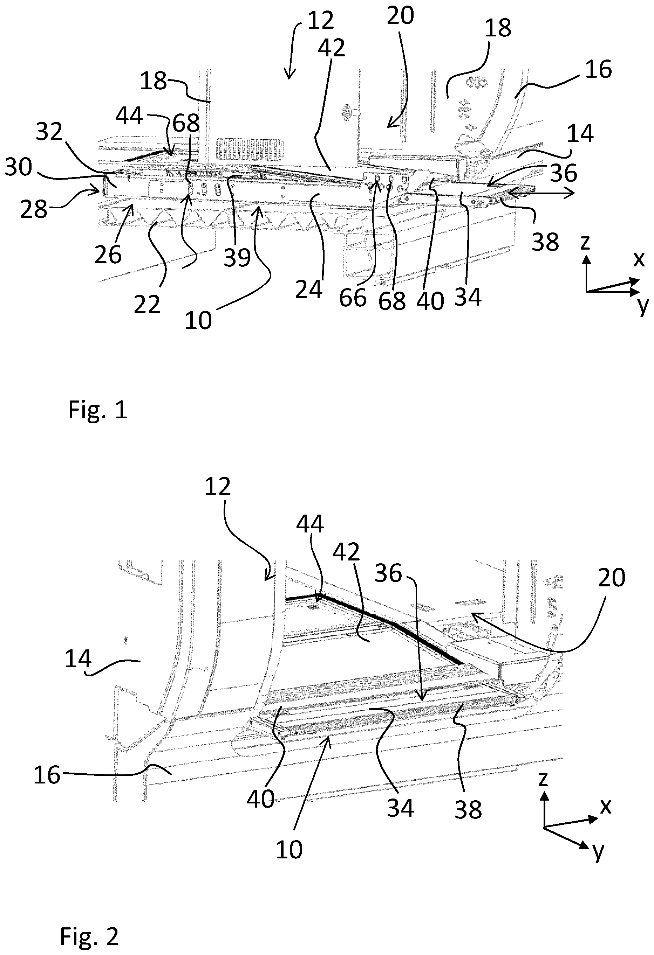

In Fig. 1 und Fig. 2 ist jeweils ein Schiebetritt 10 in einer Einbaulage in einem Fahrzeug 12 dargestellt. Das Fahrzeug 12 umfasst einen Fahrzeugkörper 14, von welchem hier eine zur Fahrzeugseite weisende Außenhaut 16, zwei Seitenwände 18, welche einen Eingangsbereich 20 begrenzen, und ein unterer Querträger 22 dargestellt ist. Ferner weist der Fahrzeugkörper 14 zwei trägerartige Seitenteile 24 auf.

Die Fahrzeuglängsrichtung, welche sich in Fahrtrichtung des Fahrzeuges 12 erstreckt, ist in den Figuren mit x gekennzeichnet, die Fahrzeugquerrichtung mit y und die Fahrzeughochrichtung mit z.

Der Schiebetritt 10, welcher in einem im Eingangsbereich 20 des Fahrzeuges 12 vorgesehenem Hohlraum 26 angeordnet ist, umfasst einen Grundrahmen 28, welcher zwei Längsträger 30 und einen Querträger 32 umfasst, die u-förmig zueinander angeordnet sind. Gegenüber dem Grundrahmen 28 ist nach Art einer Schublade ein Ausschub 34 in Fahrzeugquerrichtung (y-Richtung) ein- und ausfahrbar. Der Ausschub 34 weist eine ebene Trittfläche 36 auf. Der Ausschub weist eine starr am Ausschub 34 angeordnete Vorderkante 38 auf.

Der Schiebetritt 10 umfasst ferner hier pauschal als mechanische und elektrische Komponenten mit dem Bezugszeichen 39 versehene Bauteile, wie einen Linearantrieb und eine Führung zum linearen Verfahren des Ausschubs 34.

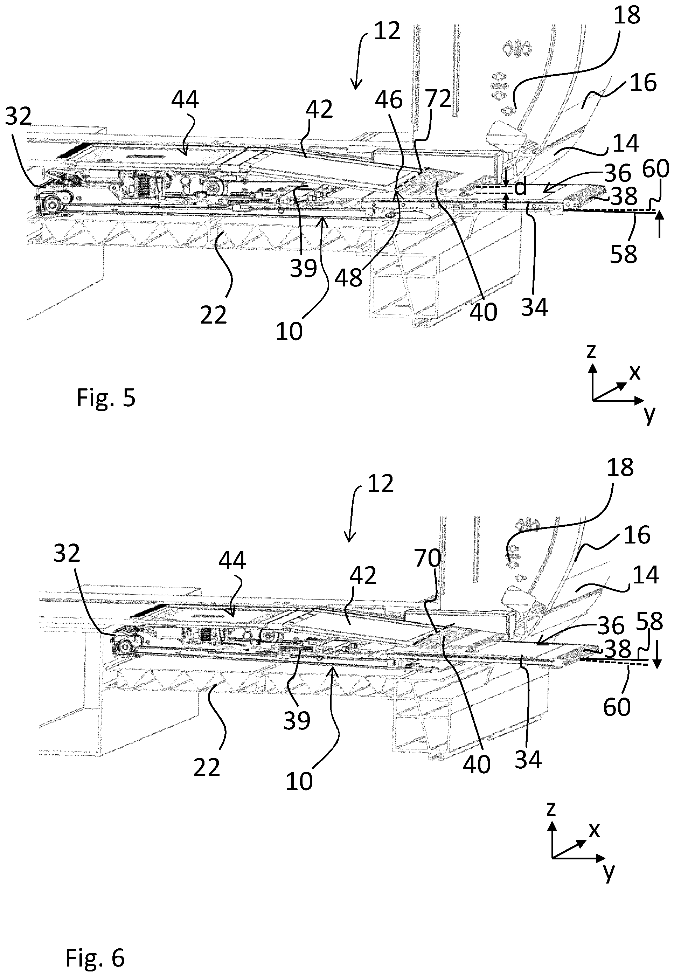

Ferner umfasst der Schiebtritt 10 noch eine Trittstufe 40, welche fest am Grundrahmen 28 angeordnet ist. Die Trittstufe 10 weist zur Trittfläche 36 des Ausschubs 34 eine feste vertikale Distanz d (vgl. Fig. 5) auf. Der Ausschub 34 verfährt unterhalb der Trittstufe 40.

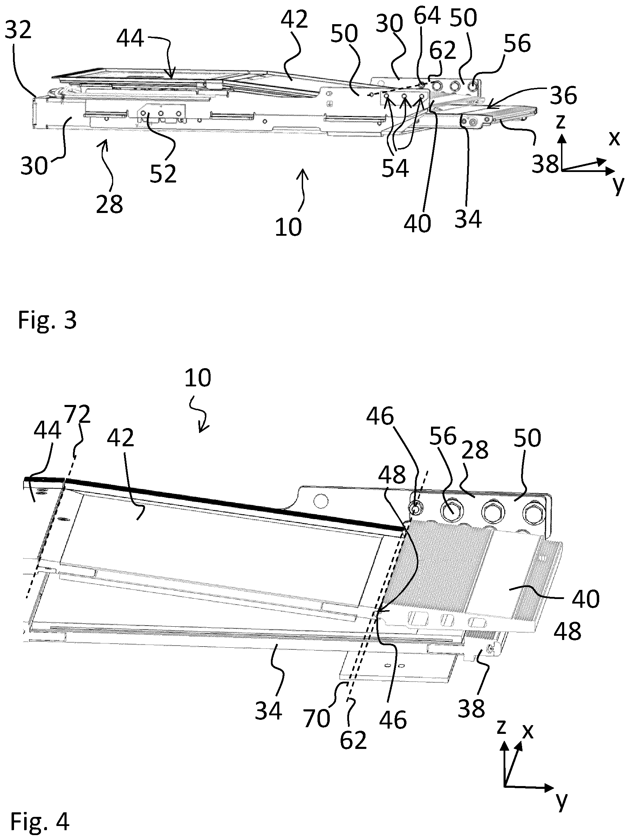

In Richtung Fahrzeuginnenseite ist die Trittstufe 40 mit einer Deckplatte 42 verbunden. Die Deckplatte 42 dient zur Überbrückung der vertikalen Distanz von der Trittstufe 40 zum Fahrzeugboden 44. Die Deckplatte 42 und die Trittstufe 40 sind beweglich miteinander verbunden. Wie in Fig. 4 gut erkennbar ist, weist die Trittstufe 40 einen nasenförmigen Vorsprung 46 auf, welche in eine abgerundete Nut 48 in der Deckplatte 42 eingreift. Die Trittleiste 40 und die Deckplatte 42 sind zueinander verschwenkbar.

Wie in Fig. 3 gut erkennbar ist, weist der Grundrahmen 28 die zwei Längsträger 30 auf, welche einen ersten Befestigungsabschnitt 50 und einen zweiten Befestigungsabschnitt 52 zur Anbindung an das Fahrzeug 12 aufweisen. Der erste Befestigungsabschnitt 50 ist als in Fahrzeughochrichtung (z-Richtung) hervorstehende Lasche. Der erste Befestigungsabschnitt 50 und der zweite Befestigungsabschnitt 52 weisen jeweils Öffnungen 54 für Schrauben 56 zum Fixieren des Grundrahmens 28 bzw. der Längsträger 30 an den Seitenteilen 24 des Fahrzeuges 10 auf.

Aus einer Zusammenschau der Fig. 5 und 6 ist erkennbar, dass der Schiebetritt 10 als Ganzes gegenüber dem Fahrzeugrundkörper 14 verschwenkbar ist. Es sind der Grundrahmen 28 zusammen mit dem Ausschub 34 und mit der Trittleiste 40 gegenüber dem Fahrzeug 12 verschwenkbar.

In Fig. 5 ist der Schiebetritt 10 so verschwenkt, dass der Ausschub 34 bzw. die Vorderkante 38 nach oben in Fahrzeughochrichtung (z-Richtung) angehoben ist. In Fig. 5 ist gut erkennbar, dass das im Fahrzeug 12 angeordnete Ende des Schiebtritts 10 nach unten verschwenkt ist und auf dem Querträger 22 aufliegt.

Um die Verschwenkung zu verdeutlichen, ist die Waagerechte hier durch die durchgezogene Linie 58 dargestellt und dazu die Ausrichtung des Grundrahmens 28 mit gestrichelter Linie 60.

In Fig. 6 ist der Ausschub 34 bzw. die Vorderkante 38 gegenüber dem Fahrzeug 12 nach unten abgesenkt. Das innerhalb des Fahrzeuges 12 angeordnete Ende des Grundrahmens 28 ist nach oben verschwenkt.

Die erste Drehachse 62, um welcher der Schiebetritt 10 relativ zum Fahrzeug 12 verschwenkbar ist, ist hier durch einen Bolzen 64 realisiert, welcher den jeweils einen Längsträger 30 des Grundrahmens 28 und ein Seitenteil 24 durchragt (vgl. Fig. 1, 3 und 4). Zur Führung und Fixierung des Grundrahmens 28 in dem Fahrzeug 12 sind in dem Seitenteil 24 jeweils zu den Öffnungen 54 in dem ersten Befestigungsabschnitt 50 und dem zweiten Befestigungsabschnitt 52 fluchtende Langlöcher 66 ausgebildet, durch welche die Schrauben 56 zur Fixierung hindurchsteckbar ist.

Die Langlöcher 66 definieren als Anschlag 68 gleichzeitig den maximalen Verschwenkwinkel. Schlagen die Schrauben 56 oben oder unten an den Länglöchern 66 an, so ist der maximale Verschwenkwinkel erreicht.

Die erste Drehachse 62 des Grundrahmens 28 gegenüber dem Fahrzeugkörper 14 ist vorliegend in Fahrzeugquerrichtung (y-Richtung) betrachtet außermittig der Länge der Längsträger 30 des Grundrahmens 28 angeordnet. Die erste Drehachse 62 ist in der zur Fahrzeugaußenseite weisenden Hälfte angeordnet und benachbart zum ersten Befestigungsabschnitt 50.

Ferner ist die erste Drehachse 60 benachbart zu einer zweiten Drehachse 70, um welche die Deckplatte 42 und die Trittleiste 40 verschwenkbar sind. Der Stoß zwischen der Deckplatte 24 und der Trittleiste 40 weist so viel Spiel auf, dass auch bei einer maximalen Verschwenkung der Trittleiste 40 zusammen mit dem Grundrahmen 28 um die erste Drehachse, keine Verschiebung der Deckplatte 42 bewirkt wird. Die Deckplatte 42 ist selbst ortsfest mit dem Fahrzeug 12 und hier dem Fahrzeugboden 44 verbunden und gegenüber dem Fahrzeugboden 44 um eine dritte Drehachse 72 verschwenkbar (vgl. Fig. 4). Bei Verschwenken des Grundrahmens 28 und dabei Veränderung der Neigung der Trittfläche 36 und der Trittleiste 40, verändert sich auch die Neigung der Deckplatte 42, jedoch verschiebt sich die Deckplatte 42 nicht in Fahrzeugquerrichtung (y-Richtung) oder in Fahrzeughochrichtung (x-Richtung)

### Bezugszeichenliste

- 10: Schiebetritt
- 12: Fahrzeug
- 14: Fahrzeugkörper/Wagenkasten
- 16: Außenhaut
- 18: Seitenwand
- 20: Eingangsbereich
- 22: unterer Querträger
- 24: Seitenteil
- 26: Hohlraum
- 28: Grundrahmen
- 30: Längsträger (Grundrahmen)
- 32: Querträger (Grundrahmen)
- 34: Ausschub
- 36: Trittfläche
- 38: Vorderkante
- 39: mechanische und elektrische Komponenten
- 40: Trittleiste
- 42: Deckplatte
- 44: Fahrzeugboden
- 46: Vorsprung
- 48: Nut
- 50: erster Befestigungsabschnitt
- 52: zweiter Befestigungsabschnitt
- 54: Öffnung
- 56: Schraube
- 58: Linie (Waagerechte)
- 60: Linie (Verschwenkung Grundrahmen)
- 62: erste Drehachse
- 64: Bolzen
- 66: Langloch (Seitenteil)
- 68: Anschlag
- 70: zweite Drehachse
- 72: dritte Drehachse

## Patentansprüche

1. Fahrzeug mit einem Fahrzeugkörper (14) und einem Schiebetritt (10) mit einem verlagerbaren Ausschub (34) und einer Trittleiste (40), wobei der Ausschub (34) eine Vorderkante (38) aufweist, wobei der Ausschub (34) gemeinsam mit der Trittleiste (40) gegenüber dem Fahrzeugkörper (14) um eine definierte Drehachse (62) verschwenkbar ist, und wobei die Trittleiste (40) und der Ausschub (34) derart gemeinsam verschwenkbar sind, dass eine vertikale Distanz (d) zwischen der Trittleiste (40) und einer Trittfläche (36) des Ausschubs (34) bei einem Verschwenken unverändert bleibt.

2. Fahrzeug nach dem vorstehenden Anspruch,
**dadurch gekennzeichnet, dass**
der Schiebtritt (10) einen Grundrahmen (28) aufweist und der Grundrahmen gemeinsam mit dem Ausschub (34) und der Trittleiste (40) um die definierte Drehachse (62) verschwenkbar ist.

3. Fahrzeug nach einem der vorstehenden Ansprüche,
**dadurch gekennzeichnet, dass**
der Schiebetritt (10) an einem ortsfest mit dem Fahrzeug (12) verbundenen Seitenteil (24) verdrehbar gelagert ist.

4. Fahrzeug nach einem der vorstehenden Ansprüche,
**dadurch gekennzeichnet, dass**
der maximale Verschwenkwinkel durch einen Anschlag (68) begrenzt ist.

5. Fahrzeug nach einem der vorstehenden Ansprüche,
**dadurch gekennzeichnet, dass**
die Trittleiste (40) fest mit dem Grundrahmen (28) verbunden ist.

6. Fahrzeug nach einem der beiden vorstehenden Ansprüche,
**dadurch gekennzeichnet, dass**
die dem Ausschub (34) abgewandte Stirnseite der Trittleiste (40) mit einer Deckplatte (42) bewegbar in Eingriff steht.

7. Fahrzeug nach dem vorstehenden Anspruch,
**dadurch gekennzeichnet, dass**
die erste Drehachse (62), um welche der Schiebetritt (10) gegenüber dem Fahrzeug (12) verschwenkbar ist, derart relativ zu einer zweiten Drehachse (70), um welche die Deckplatte (42) relativ zur Trittleiste (40) verschwenkbar ist, angeordnet ist, dass bei Verschwenken des Schiebetritts (10) um den maximalen Verschwenkwinkel keine Verschiebung der Deckplatte (42) in einer Fahrzeugquerrichtung erfolgt.

8. Fahrzeug nach dem vorstehenden Anspruch, **dadurch gekennzeichnet, dass** die erste Drehachse (62) konzentrisch zur zweiten Drehachse (70) angeordnet ist.

9. Fahrzeug nach einem der vorstehenden Ansprüche,
**dadurch gekennzeichnet, dass**
die erste Drehachse (62) in Querrichtung des Fahrzeuges (12) betrachtet, außermittig der sich in Querrichtung (x-Richtung) des Fahrzeugs (12) erstreckenden Länge des Grundrahmens (28) angeordnet ist.

10. Verfahren zur Einstellung der vertikalen Position einer Vorderkante (38) eines Schiebetritts (10), wobei ein Schiebetritt (10) in ein Fahrzeug (12) eingebaut wird und anschließend ein Ausschub (34) mitsamt einer Trittleiste (40) verschwenkt wird.
